# EUROPÄISCHE PATENTSCHRIFT

(11) **EP 1 057 053 B1**
(45) Veröffentlichungstag und Bekanntmachung des Hinweises auf die Patenterteilung: **14.11.2001**
(21) Anmeldenummer: 98936058.1
(22) Anmeldetag: 07.08.1998
(51) Int. Cl.: G02B 6/00, F16L 55/165, H02G 1/08, G02B 6/44

(54) **BRIDE MIT SPANNVERSCHLUSS**
TIGHTENING STRIP WITH TENSION LOCKING SYSTEM
COLLIER DE SERRAGE A SYSTEME DE FERMETURE PAR SERRAGE

(30) Priorität: 17.02.1998 EP 98102682
(43) Veröffentlichungstag der Anmeldung: 06.12.2000
(73) Patentinhaber: KA-TE System AG, CH-8041 Zürich (CH); Hecht, Reinhard, 93047 Regensburg (DE); Manstorfer, Karl, 93047 Regensburg (DE)
(72) Erfinder: HECHT, Reinhard, D-93047 Regensburg (DE); MANSTORFER, Karl, D-93047 Regensburg (DE); LEHMANN, Peter, CH-3172 Niederwangen (CH); MAAG, Heinz, CH-3172 Niederwangen (CH); WYDER, Hans, CH-8617 Mönchaltorf (CH); BUNSCHI, Hans, CH-8041 Zürich (CH); WEINGARTEN, Marco, CH-8041 Zürich (CH)
(74) Vertreter: Patentanwälte Schaad, Balass, Menzl & Partner AG
(86) Internationale Anmeldenummer: CH9800331
(87) Internationale Veröffentlichungsnummer: WO9942865

(56) Entgegenhaltungen:
- EP-A- 0 109 739
- EP-A- 0 158 416
- WO-A-85/00870
- WO-A-93/06986
- DE-A- 4 103 847

## Beschreibung

Die Erfindung betrifft eine Bride mit einem Spannverschluss gemäss Anspruch 1.

Briden gibt es in verschiedenen Ausführungsformen, z.B. als Innen- oder als Aussenbriden, mit oder ohne spezielle Haltemittel für zu bündelnde oder zu verlegende, langgestreckte Gegenstände, wie Kabel, Rohre, Schläuche o.ä.. Gemeinsam ist den Briden, dass die Kraft zum Spannen der Bride von aussen, z.B. durch Drehen von Schrauben oder durch Umlegen eines Spannhebels, in das System eingebracht werden muss. Gerade an unzugänglichen Stellen, wenn zudem grössere Kräfte zum Spannen erforderlich sind, ist dies oft ein Problem.

Die WO 85/00870 offenbart eine als Feder ausgebildete, spiralförmige Bride zur Reparatur von defekten Rohrleitungen. Mittels eines Spannverschlusses wird die Bride in axialer Richtung in die Länge gezogen und dann in die Rohrleitung eingeführt. Nach dem Lösen eines Rastelements des Spannverschlusses zieht sich die Bride in axialer Richtung zusammen und vergrössert sich im Durchmesser bis sie an der Innenwand der Rohrleitung anliegt. Infolge der Durchmesservergrösserung trennt sich die Bride dabei vom Spannverschluss, welcher anschliessend aus der Rohrleitung herausgezogen wird.

Aufgabe der vorliegenden Erfindung ist es daher, eine Bride zu Verfügung zu stellen, die problemlos montiert und einfach gespannt werden kann.

Diese Aufgabe wird gelöst durch eine Bride mit einem zu einem Ring bzw. zu einer Spirale gebogenen Bridenband, das einen Befestigungsabschnitt aufweist, an dem ein Spannverschluss befestigt ist. Das Bridenband ist ring-förmig zum Spannverschluss zurück und durch einen im oder am Spannverschluss angeordneten Freilauf hindurchgeführt. Ein Blockierelement im Freilauf, in Form von Blockierzähnen oder einem Blockierarm, wirkt mit einem Blockierabschnitt des Bridenbandes so zusammen, dass das Bridenband entgegen seiner Spannrichtung wegrutschen kann. Das Blokkierelement des Freilaufs ist mit einer im Spannverschluss vorgesehenen Feder gekoppelt. Die Feder ist einerseits bezüglich des Bridenbandes fest abgestützt andererseits an einem lösbaren Rastelement abgestützt, das sie in Raststellung gespannt hält. Wird das Rastelement aus seiner Raststellung ausgerastet, entspannt sich die Feder und die Spannkraft wird über das mit der Feder gekoppelte Blockierelement im Freilauf auf das Bridenband übertragen. Die Bride wird dadurch gespannt.

Die nötige Energie, um die Bride zu spannen, ist also bereits in der Bride gespeichert, und zwar derart, dass sie leicht freigesetzt werden kann und die Bride sich infolgedessen selbst in den gespannten Zustand versetzt.

Eine erfindungsgemässe Bride kann sowohl als Innen- oder als auch als Aussenbride gestaltet sein. Entsprechend wird das Bridenband einer Aussenbride beim Ausrasten des Rastelementes unter Zugspannung und dasjenige einer Innenbride unter Druckspannung gesetzt. Vor der Montage ist das Bridenband einer Innenbride spiralförmig aufgewickelt und wird dann in etwa zu einer Ringform aufgeweitet, während das Bridenband einer Aussenbride vor der Montage eher ringförmig ist und dann unter Zugspannung verengt und gegebenenfalls spiralförmig aufgewickelt wird.

Besonders geeignet ist die erfindungsgemässe Bride, wie in Anspruch 9 beschrieben, als Innenbride, da das Bridenband, das für einen solchen Fall mit einer entsprechenden Knicksteifigkeit gewählt wird, sehr einfach unter Druckspannung gesetzt werden kann.

Eine solche Innenbride ist, gemäss Anspruch 13, hervorragend für das Verlegen und Halten von langgestreckten Gegenständen, wie z.B. von Kabeln oder Rohren, in Rohrleitungssystemen, speziell auch in Abwasserleitungen und nichtbegehbaren Rohren, geeignet. Dabei erweist sich nicht nur die einfache Möglichkeit die Bride zu spannen als Vorteil, ein weiterer Vorteil für die Verwendung als Innenbride in einem Rohr ist der verstellbare Radius des ring- bzw. spiralförmig gebogenen Bridenbandes.

Die Bride wird mit spiralförmig aufgewickeltem Bridenband, dessen Radius kleiner ist als der Innenradius des Rohres, in das Rohr eingebracht. Das Bridenband ist für Innenbriden vorzugsweise aus Edelstahl oder einem vergleichbaren Material mit entsprechender Knicksteifigkeit und speziell für Abwasserleitungen mit der entsprechenden Korrosionsbeständigkeit. An der Stelle im Rohr, an der Kabel oder Schläuche o.ä. mittels der Bride im Rohr fixiert werden sollen, wird die Bride aufgeweitet bis das Bridenband an der Rohrinnenwand anliegt. Schliesslich wird das Rastelement des Spannverschlusses gelöst und das Bridenband durch die Federkraft unter Druckspannung gesetzt. Dadurch wird die Bride mit solcher Kraft gegen die Rohrinnenwand gepresst, dass sie auch durch stark strömende Medien im Rohr nicht aus ihrer Position gebracht wird.

Eine solche, für das Verlegen und Halten von langgestreckten Gegenständen in Rohren verwendete Innenbride weist vorzugsweise Halter, gemäss den Ansprüchen 7 oder 8,auf,wobei dieHalteelementederHalterinsbesondere radial nach innen vom Bridenband abstehen. Vorrichtungen, mit denen man vorteilhaft langgestreckte Gegenstände in die Halter einer solchen in einem Rohr verwendeten Innenbride einsetzen kann sind in der EP-A- 0 936 713 und in der WO-A- 99/43063 beschrieben.

Für die Montage in nichtbegehbaren Rohren können die erfindungsgemässen Briden auch mit Hilfe eines Roboters im Rohr montiert werden. Dazu können die Briden mit Hilfselementen gemäss den Ansprüchen 10 bis 13 ausgerüstet werden, welche die Montage mit Hilfe des Roboters erleichtern. Beispielsweise kann das Bridenband einen Zugriffsabschnitt mit Eingreiföffnungen oder Löchern aufweisen, in welche dann Robotergreifer oder ein Zahnrad eines Roboters hineingreifen können, um die Bride beispielsweise kontrolliert aufzuweiten. In der EP-A-0 936 478 und der EP-A-0 978 743 sind geeignete Roboter für eine solche Montage einer erfindungsgemässen Bride beschrieben.

Weitere bevorzugte Ausführungsformen sind Gegenstand der weiteren abhängigen Ansprüche.

Anhand der Figuren 1 bis 10 wird im Folgenden die Erfindung an einem Beispiel erläutert. Es zeigen rein schematisch:
- Fig. 1: einen Rohrquerschnitt mit einer ersten Ausführungsform einer mit Hilfe eines Roboters in dem Rohr montierbaren Innenbride vor der Montage mit einer ersten Ausführungsform eines Spannverschlusses und einem spiralförmig aufgewickeltem Bridenband;
- Fig. 2: den Rohrquerschnitt und die Innenbride aus Fig. 1, wobei das Bridenband so aufgeweitet ist, dass es an der Rohrinnenwand anliegt;
- Fig. 3: einen Ausschnitt aus einer zweiten Ausführungsform einer Innenbride, welche mit Hilfe eines zum in Fig. 1 dargestellten Roboter unterschiedlich ausgestalteten Roboters in einem Rohr montiert werden kann;
- Fig. 4a: eine erste Ausführungsform eines Spannverschlusses mit Rastbolzen und Rastschablone, wie er in den Fig. 1 und 2 gezeigt ist, mit gespannter Feder in einem Schnitt in Längsrichtung;
- Fig. 4b: den Spannverschluss aus Fig. 4a mit Blick auf die erste, die Rastschablone aufweisende Stirnseite;
- Fig. 5a: den Spannverschluss aus Fig. 4a in analoger Darstellung mit verschobener Rastschablone, entriegeltem Rastbolzen und teilweise entspannter Feder;
- Fig. 5b: den Spannverschluss aus Fig. 5a in analoger Darstellung zur Darstellung in Fig. 4b;
- Fig. 6a: eine zweite Ausführungsform eines Spannverschlusses mit einem Drehbolzen als Rastelement und gespannter Feder in einem Schnitt in Längsrichtung;
- Fig. 6b: den Spannverschluss aus Fig. 6a in analoger Darstellung zur Darstellung in den Fig. 4b und 5b;
- Fig. 7a: eine dritte Ausführungsform eines Spannverschlusses mit einem Rastbalken als Rastelement und zwei gespannten Schraubenfedern in einem Schnitt in Längsrichtung;
- Fig. 7b: den Spannverschluss aus Fig. 7a mit Blick vom Bridenband her
- Fig. 7c: den Spannverschluss aus Fig. 7a in analoger Darstellung zur Darstellung in den Fig. 4b, 5b und 6b;
- Fig. 8: eine erste Ausführungsform eines Bridenbandes einer mit Hilfe eines Roboters in einem Rohr montierbaren Innenbride;
- Fig. 9: eine zweite Ausführungsform eines Bridenbandes einer mit Hilfe eines Roboters in einem Rohr montierbaren Innenbride;
- Fig. 10a: einen am Bridenband befestigbaren Halter für die Aufnahme von langgestreckten Gegenständen mit Blick quer zum Bridenband;
- Fig. 10b: den Halter aus Fig. 10a mit Blick in Richtung des Bridenbandes.

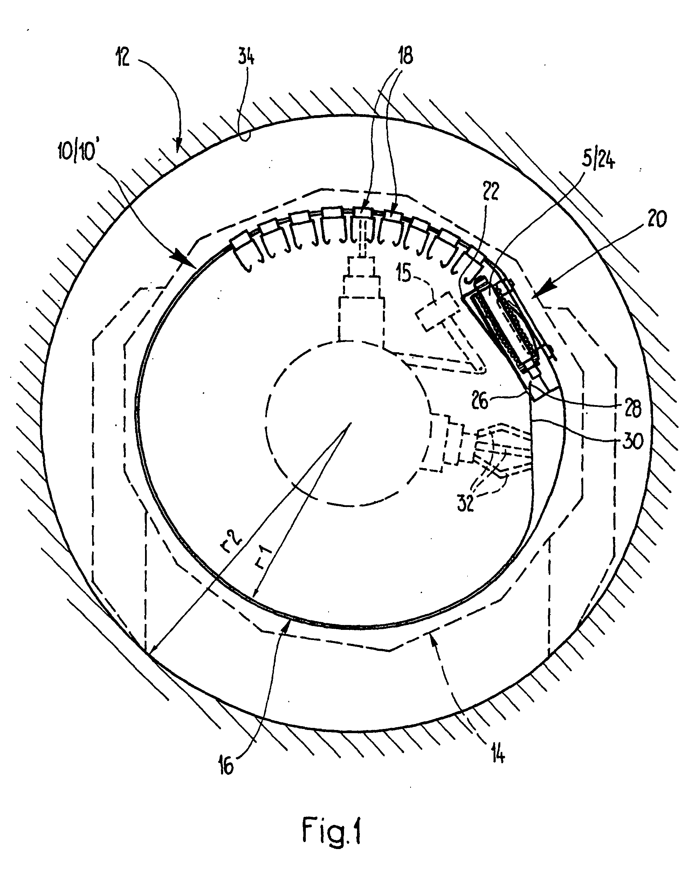

Fig. 1 zeigt als Beispiel für eine erfindungsgemässe Bride 10 eine in einem Rohr 12 mit Hilfe eines Roboters 14 montierbare Innenbride 10'. Der Roboter 14 ist in Fig. 1 nur durch gestrichelte Linien angedeutet. Die Innenbride 10' ist in ihrem Zustand vor der Montage im Rohr 12 gezeigt und weist ein spiralförmig aufgewickeltes Bridenband 16 auf, dessen Radius r₁ geringer ist als der Innenradius r₂ des Rohres 12. Für die Aufnahme von langgestreckten Gegenständen, wie z.B. von Rohren oder Kabeln, sind mehrere Halter 18 hintereinander am Bridenband 16 befestigt, die radial nach innen zeigen. In dem in Fig. 1 gezeigten Beispiel ist als Spannverschluss 20 ein Spannverschluss 20 mit einem durch eine Rastschablone 22 verriegelten Rastbolzen 24 als Rastelement 5 in gespanntem Zustand gezeigt. Der Spannverschluss 20 weist eine Einführöffnung 26 zum einführen eines innenliegenden Bandendes 28 des spiralförmig gebogenen Bridenbandes 16 auf. Diesem Ende 28 benachbart ist ein Zugriffsabschnitt 30 des Bridenbandes angeordnet, der durch das Einführen des Bandendes 28 in die Einführöffnung 26 des Spannverschlusses 20 von der radial aussenliegenden, benachbarten Windung des Bridenbandes 16 beabstandet ist. Auf diese Weise kann der Zugriffsabschnitt 30 leicht von Robotergreifern 32 (durch gestrichelte Linien angedeutet) ergriffen und die Bride 10, 10' auf den Radius r₂ des Rohres 12 aufgeweitet werden.

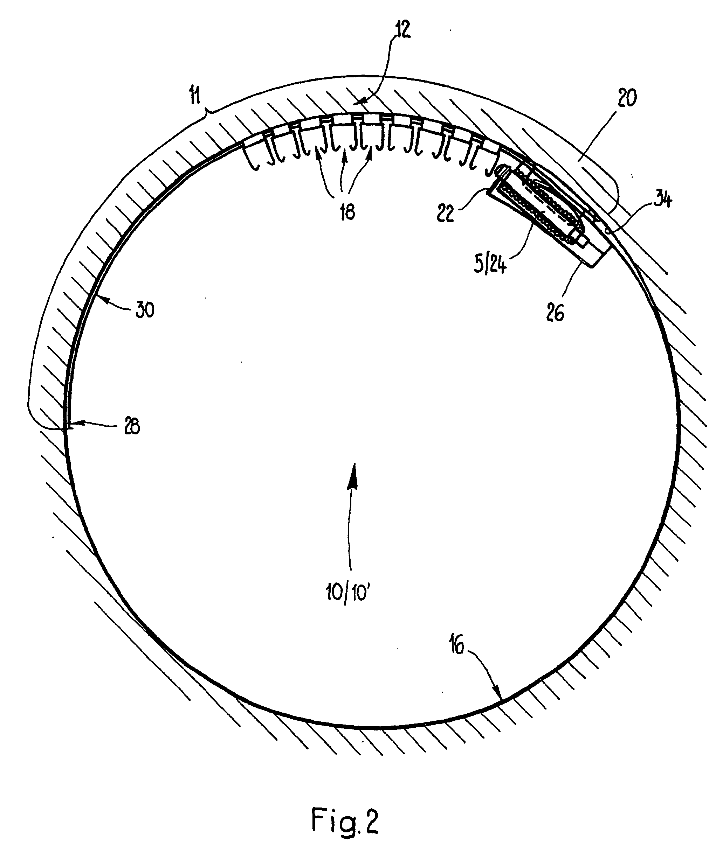

In Fig. 2 ist die in Fig. 1 dargestellte Innenbride 10' in aufgeweitetem Zustand mit immer noch gespanntem Spannverschluss 20 dargestellt. Das vormals spiralförmig aufgewickelte Bridenband 16 ist nur noch in einem Abschnitt entlang des Rohres 12 doppelt geführt und liegt nun, eher eine Ringform als eine Spirale bildend, eng an der Rohrinnenwand 34 des Rohres 12 an. Das innenliegende Bandende 28 des Bridenbandes 16 befindet sich nicht mehr in der Einführöffnung 26 des Spannverschlusses 20 und der diesem Ende benachbarte, von den Robotergreifern freigegebene Zugriffsabschnitt 30 des Bridenbandes 16 ist aufgrund der Federkraft des z.B. aus Edelstahl gefertigten Bridenbandes nicht mehr von der benachbarten Windung des Bridenbandes 16 beabstandet. In diesem Zustand kann die Bride 10, 10' durch Lösen der Rastschablone 22, z.B. mittels eines in Fig. 1 gestrichelt dargestellten Hammers 15 des Roboters 14, im Rohr verspannt werden.

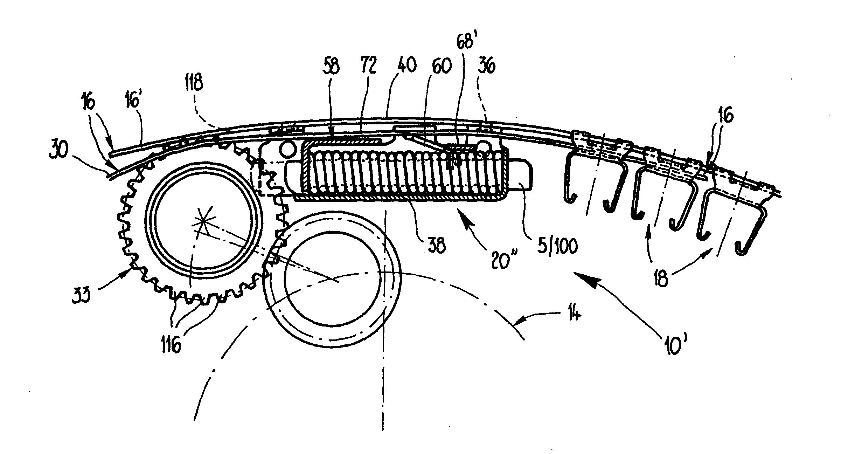

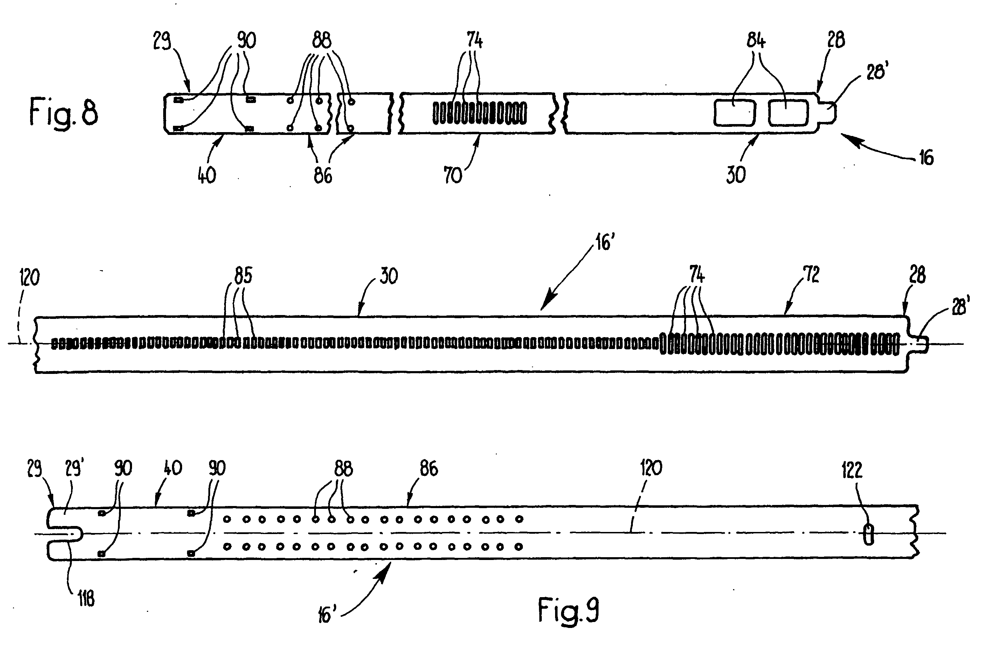

Fig. 3 zeigt eine weitere Ausführungsform der Innenbride 10' mit einer weiteren Ausführungsform des Spannverschlusses 20''. Diese Innenbride 10' wird statt durch Robotergreifer 32 mit Hilfe eines am Roboter 14 angebrachten Zahnrades 33 aufgeweitet. Der Zugriffsabschnitt 30 des Bridenbandes 16' liegt an der radial aussenliegenden, benachbarten Windung des Bridenbandes 16' an, welche den Zugriffsabschnitt 30 von der Rohrinnenwand beabstandet hält. Eine Aussparung 118 (siehe auch Fig. 9) in der dem Zugriffsabschnitt 30 benachbarten Windung des Bridenbandes 16' verhindert eine Berührung mit dem Zahnrad 33 des Roboters 14. Der durch die benachbarte Windung des Bridenbandes gegebene Abstand zwischen Rohrinnenwand 34 und Zugriffsabschnitt 30 verhindert, dass das Zahnrad 33 beim Kämmen mit dem Zugriffsabschnitt 30 mit der Rohrinnenwand in Berührung kommt. Da der Zugriffsabschnitt 30 für das Aufweiten der Bride 10, 10' mit Hilfe des Zahnrades 33 nicht von der benachbarten Windung des Bridenbandes beabstandet gehalten werden muss, ist in dem gezeigten Spannverschluss 20'' die Einführöffnung 26 für das innenliegende Bandende 28 des Bridenbandes 16' nicht mehr notwendig. Auf die weiteren Besonderheiten dieser Innenbride 10' und speziell des Bridenbandes 16 und des Spannverschlusses 20'' wird weiter unten eingegangen.

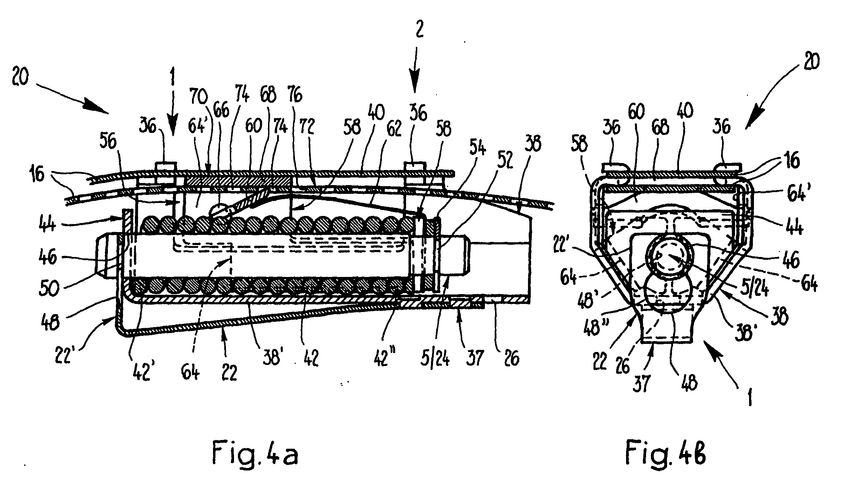

Die Fig. 4a und 4b zeigen den in den Fig. 1 und 2 dargestellten gespannten Spannverschluss 20 mit Rastschablone 22 und Rastbolzen 24 detaillierter. Der Spannverschluss 20 ist über Befestigungselemente 36 seines langgestreckten Gehäuses 38 am Befestigungsabschnitt 40 des Bridenbandes 16 befestigt und weist einen ersten Endabschnitt 1 und einen zweiten Endabschnitt 2 auf. Eine als Schraubenfeder 42 ausgebildete und als Druckfeder wirkende Feder des Spannverschlusses 20, durch die der Rastbolzen 24 hindurchgeführt ist, wird vom Gehäuse 38 auf den Längsseiten wannenförmig umschlossen. Das erste Ende 42' der Feder 42 ist im ersten Endbereich 1 des Spannverschlusses 20 an einer Stirnwand 44 des Gehäuses 38 abgestützt, die eine Durchführöffnung 46 für den Rastbolzen 24 aufweist. Im zweiten Endbereich 2 des Spannverschlusses 20 ist das Gehäuse 38 offen. In diesem zweiten Endbereich 2 des Spannverschlusses 20 ist auf der dem Bridenband 16 gegenüberliegenden Längsseite die Einführöffnung 26 angeordnet.

Die Rastschablone 22 des Spannverschlusses 20 ist ebenfalls an der dem Bridenband 16 gegenüberliegenden Längsseite 37 des Gehäuses 38 befestigt und ist beispielsweise aus einem Blech aus Federstahl geformt. Die Rastschablone 22 ist so ausgebildet, dass ein Teil 22' der Rastschablone 22, der eine schlüssellochförmige Schablonenöffnung 48 mit einem schmaleren Öffnungsteil 48' und einem weiteren Öffnungsteil 48'' aufweist, ausserhalb des Gehäuses 38 vor der Stirnwand 44 angeordnet und dort in Richtung auf das Bridenband 16 verschiebbar ist. Der gegen den ersten Endbereich 1 des Spannverschlusses 20 ausgerichtete Teil des Rastbolzens 24 weist eine erste ringförmige Nut 50 mit gegenüber dem Rastbolzen 24 verringerten Durchmesser auf. In dem in den Fig. 4a und 4b gezeigten, gespannten Zustand des Spannverschlusses 20 ist der Rastbolzen 24 durch die Durchführöffnung 46 der Stirnwand 44 und durch die Schablonenöffnung 48 der Rastschablone 22 hindurchgeführt und die Begrenzung des schmaleren Öffnungsteils 48' der Schablonenöffnung 48 greift in die erste Nut 50 des Rastbolzens 24 ein, wodurch der Rastbolzen 24 bei gespannter Feder 42 verriegelt und in seiner Raststellung gehalten wird.

An der der Stirnwand 44 gegenüberliegenden Seite des Rastbolzens 24 ist in einer zweiten Nut 52 des Rastbolzens 24 eine Riegelplatte 54 fixiert, über die ein zweites Ende 42'' der Schraubenfeder 42 bezüglich des Rastbolzens 24 abgestützt ist. Die Riegelplatte 54 dient ausserdem der Fixierung weiterer zwischen ihr und der Schraubenfeder 42 auf den Rastbolzen 24 aufgesteckter Elemente, wie z.B. der Fixierung eines einen Freilauf 56 tragenden Schlittens 58 und einer eine Blockierelement 60 des Freilaufs 56 stützenden Blattfeder 62.

Der am Rastbolzen 24 fixierte Schlitten 58 weist zwei Seitenwände 64 auf, die sich aussen an der Schraubenfeder 42 vom zweiten Endbereich 2 des Spannverschlusses 20 gegen den ersten Endbereich 1 des Spannverschlusses 20 erstrecken und gegen den ersten Endbereich 1 hin gegen das Bridenband 16 über die Schraubenfeder 42 hinausragen. Die über die Schraubenfeder 42 hinausragenden Teile 64' der Seitenwände 64 weisen Lageröffnungen 66 auf in denen das als Blockierarm ausgebildete Blockierelement 60 des Freilaufs 56 drehbar gelagert ist. Die zwei über die Feder 42 hinausragenden Teile 64' der Seitenwände 64 sind durch eine Verbindungsplatte 68, die die Schraubenfeder quer zu ihrer Längsrichtung überspannt, miteinander verbunden. Die Verbindungsplatte 68 bildet zusammen mit den Teilen 64' der Seitenwände 64 des Schlittens 58 ein Führungselement 70 des Freilaufs 56. Der freilaufende Teil des Bridenbandes 16 ist durch dieses Führungselement 70 des Freilaufs 56 hindurchgeführt und wird durch selbiges im Bereich des Spannverschlusses 20 auf einem Mindestabstand zum Befestigungsabschnitt 40 des Bridenbandes 16 gehalten. Die ebenfalls am Rastbolzen 24 befestigte Blattfeder 62 erstreckt sich, die Feder 42 in Längsrichtung überspannend, von der der Stirnwand 44 gegenüberliegenden Seite des Rastbolzens 24 bis unter die Verbindungsplatte 68 des Freilaufs 56. Sie stütz das drehbar gelagerte Blockierelement 60 des Freilaufs 56 und drückt dieses federnd gegen das Bridenband 16, das zwischen Blockierelement 60 und Verbindungsplatte 68 hindurchläuft.

Der in den Fig. 4a und 4b dargestellte, im Freilauf 56 befindliche Bandabschnitt des Bridenbandes 16 ist ein Blockierabschnitt 72, der aufgrund von Blockierlöchern 74 Blockierflanken 76 aufweist, in die das Blockierelement 60 des Freilaufs 56 einrasten kann.

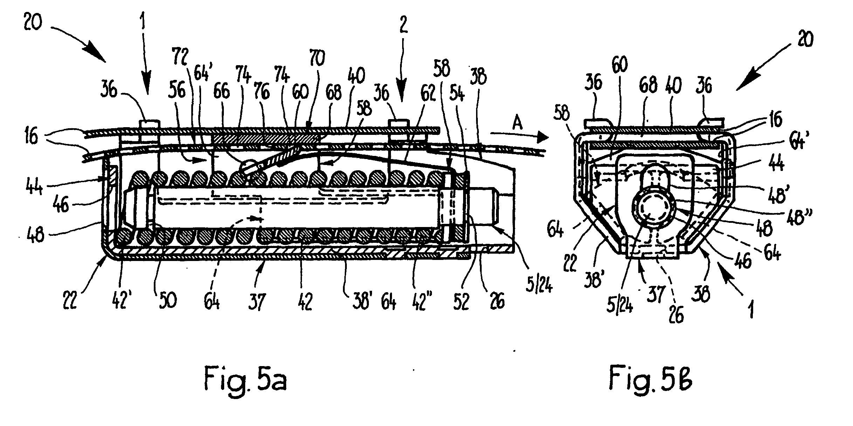

In den Fig. 5a und 5b ist der Spannverschluss 20 aus den Fig. 4a und 4b in teilweise entspanntem Zustand dargestellt. Die Rastschablone 22 ist in Richtung des Bridenbandes 16 verschoben, so dass der weitere Öffnungsteil 48" der Schablonenöffnung 48 auf die Höhe der Durchführöffnung 46 der Seitenwand 44 verschoben ist, wodurch der Rastbolzen 24 entriegelt und aufgrund der Federspannung in das Innere des Gehäuses 38 gerutscht ist. Die am Rastbolzen 24 fixierten Elemente, wie der den Freilauf 56 tragende Schlitten 58, an dem auch das Blockierelement 60 befestigt ist, und die das Blockierelement 60 stützende Blattfeder 62 sind mit dem Rastbolzen 24 gegen den zweiten Endbereich 2 des Spannverschlusses 20 verschoben. Das Blockierelement 60 greift in ein Blockierloch 74 des Blockierabschnittes 72 des Bridenbandes 16 ein und überträgt die über den Schlitten 58 auf das Blockierelement 60 weitergeleitete Kraft der Schraubenfeder 42 auf das Bridenband 16, das mit der entsprechende Federkraft unter Druckspannung (Pfeilrichtung A) gesetzt wird.

Mit dem in den Fig. 1 und 2 sowie 4a bis 5b dargestellten Spannverschluss 20 wird also das Bridenband 16, das bereits vor dem Entriegeln des Rastbolzens 24, wie in Fig. 2 gezeigt, an der Rohrinnenwand 34 anliegt, fest - mit der vor dem Einsatz der Bride 10, 10' bestimmbaren Federkraft - gegen die Rohrinnenwand 34 gepresst und die Bride 10, 10' so fest im Rohr 12 verankert.

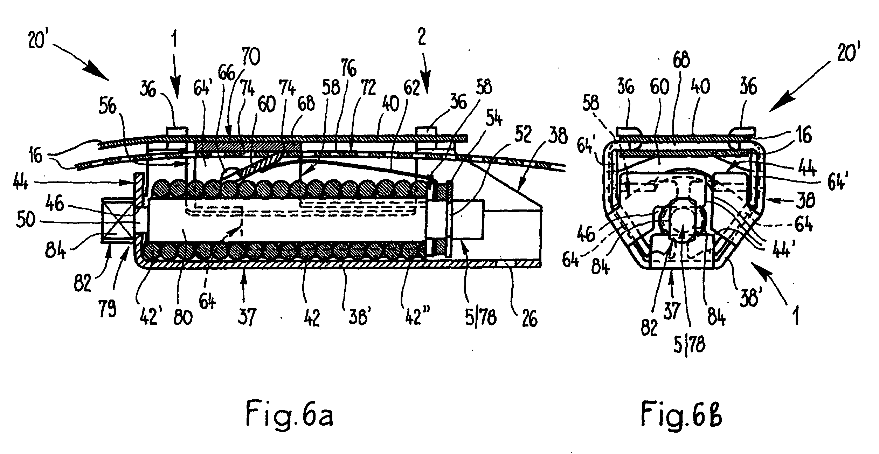

In den Fig. 6a und 6b ist eine Spannverschluss 20' gezeigt, der prinzipiell gleich aufgebaut ist, wie der Spannverschluss 20, der in den Fig. 1 und 2 und 4a bis 5b dargestellt ist. Der Spannverschluss 20' unterscheidet sich nur dadurch von dem Spannverschluss 20, dass er statt des mit der Rastschablone 22 zusammenwirkenden Rastbolzens 24 einen Drehbolzen 78 als Rastelement 5 aufweist. Der Drehbolzen 78 ist im der Stirnwand 44 zugewandten Endabschnitt 79 wiederum mit einer ersten Nut 50 versehen, die zwischen Bolzenkörper 80 und Bolzenkopf 82 liegt und beide trennt. Der Bolzenkopf 82 weist auf zwei gegenüberliegenden Seiten Abfräsungen 84 auf, so dass er annähernd eine Balkenform einnimmt. Die Abfräsungen 84 sind so bemessen, dass der Bolzenkopf 82 nur in einer definierten Stellung des Drehbolzens 78 durch die Durchführöffnung 46 der Stirnwand 44 hindurch passt. Im gezeigten Beispiel wird die Stirnwand 44 aus drei Wandelementen 44' (Fig.5b) gebildet, die eine rechteckige Durchführöffnung 46 begrenzen, durch welche der Bolzenkopf 82 in waagrechter Stellung hindurch passt. Wird der Bolzenkopf 82 durch die Durchführöffnung 46 aus dem Gehäuse 38 heraus gesteckt und in eine senkrechte Position gedreht, so greifen Teile der Wandelemente 44' der Stirnwand 44 in die Nut 50 hinter dem Bolzenkopf 82 und verhindern, dass der Drehbolzen 78 mit dem Bolzenkopf 82 durch die Durchgangsöffnung 46 der Stirnwand 44 ins Gehäuse 38 zurück rutscht.

In der in den Fig. 6a und 6b gezeigten Position des Drehbolzens mit ausserhalb des Gehäuses 38 befindlichem, senkrecht stehendem Bolzenkopf 82 ist die auf den Drehbolzen 78 aufgesteckte Schraubenfeder 42 und somit der Spannverschluss 20 gespannt. Wird der Drehbolzen 78 um 90° gedreht, rutscht der Bolzenkopf 82 durch die Durchführöffnung 46 der Stirnwand 44, die Feder 42 entspannt sich und überträgt, via Schlitten 58 und Blockierelement 60 ihre Federkraft auf den im Freilauf 56 befindliche Blockierabschnitt 72 des Bridenbandes 16 und somit auf das gesamte Bridenband 16 der Bride 10, 10'. Die Bride 10, 10' wird gespannt.

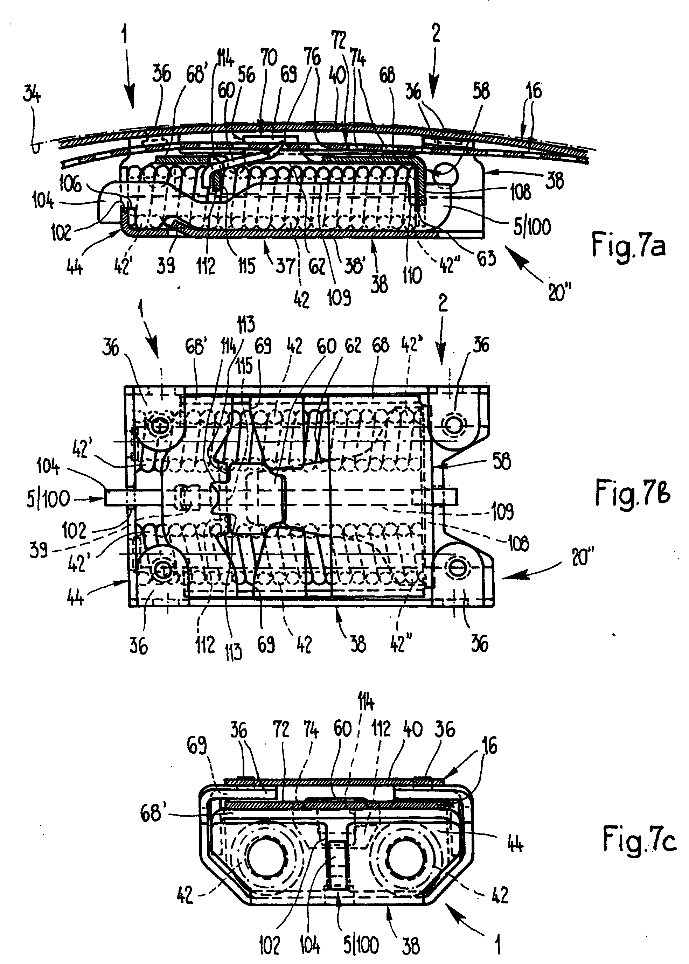

Die in Fig. 3 gezeigte weitere Ausführungsform des Spannverschlusses 20'' ist in den Fig. 7a bis 7c detaillierter dargestellt. Der Spannverschluss 20" ist im Prinzip gleich aufgebaut wie der Spannverschluss 20', der in den Fig. 6a bis 6b dargestellt ist. Das langgestreckte Gehäuse 38 des Spannverschlusses 20'' ist allerdings statt über Schrauben oder Bolzen durch Nieten über die Befestigungselemente 36 mit dem Befestigungsabschnitt 40 des Bridenbandes 16 verbunden. Dies hat den Vorteil, dass das Bridenband 16 bei aufgeweiteter Bride 10, 10' im Befestigungsabschnitt 40 enger an der Rohrinnenwand 34 anliegt.

Anstelle des von einer Schraubenfeder 42 umgebenen Drehbolzens 78 im Spannverschluss 20', ist im Spannverschluss 20'' ein Rastbalken 100 vorgesehen, der von zwei Schraubenfedern 42 flankiert ist. Anstelle der Durchführöffnung 46, weist die Stirnwand 44 des Gehäuses 38 einen Rasteinschnitt 102 auf, durch welchen zum Spannen des Spannverschlusses 20'' eine Nase 104 des Rastbalkens 100 hindurchgeführt wird. Für ein einfacheres Hindurchführen der Nase 104 durch den Rasteinschnitt 102 bei der Montage ist auf der dem Bridenband 16 gegenüberliegenden Seite 37 des Gehäuses 38 ein kleiner Teil der Gehäusewand 38' als Durchführhilfe 39 gegen den Rastbalken 100 hin aufgebogen. Die Nase 104 ist durch eine Kerbe 106 vom Körper 108 des Rastbalkens 100 getrennt. Im Gespannten Zustand des Spannverschlusses 20'' greifen die Kerbe 106 und der Rasteinschnitt 102 der Stirnwand 44 so ineinander, dass der Rastbalken 100 senkrecht zur Stirnwand 44 stehend mit seiner Nase 104 hinter die Stirnwand 44 greift und so verriegelt ist. Die Verriegelung kann gelöst werden, indem z.B. der Hammer 15 des Roboters 14, wie er in Fig. 1 dargestellt ist, auf die Nase 104 des Rastbalkens schlägt und die Nase 104 in Richtung auf das Bridenband 16 verschiebt. Die Nase 104 rutscht aufgrund der Federspannung durch den Rasteinschnitt 102 in das Gehäuse 38.

Wie in den Spannverschlüssen 20 und 20', so sind auch hier die Schraubenfedern 42 an ihrem ersten Federende 42' an der Stirnwand 44 des Gehäuses 38 abgestützt. Das gegenüberliegende, zweite Federende 42'' ist aber statt an einer Riegelplatte 54 an einer Frontwand 108 des Schlittens 58 abgestützt. Der Schlitten 58 weist wiederum Seitenwände 64 auf, welche sich zwischen den Schraubenfedern 42 und dem Gehäuse 38 vom zweiten Endbereich 2 zum ersten Endbereich 1 des Spannverschlusses 20" erstrecken. Über die Frontwand 108, welche im zweiten Endbereich 2 des Spannverschlusses 20" in einer Verankerungsnut 110 des Rastbalkens 100 verankert ist, ist der Schlitten 58 mit dem Rastbalken 100 gekoppelt und wird zusammen mit diesem beim Lösen der Verriegelung des Rastbalkens 100 durch die Schraubenfedern 42 in Richtung des zweiten Endbereiches 2 des Spannverschlusses 20'' bewegt. Die Seitenwände 64 des Schlittens 58 ragen auf der dem Bridenband 16 zugewandten Seite über die Schraubenfedern 42 hinaus und sind in den beiden Endbereichen 1, 2 durch Verbindungsplatten 68, 68' miteinander verbunden. Die Verbindungsplatten 68, 68' bilden zusammen mit zwischen ihnen angeordneten, die Schraubenfedern 42 seitlich von den Seitenwänden 64 her übergreifenden Führungsplatten 69 das Führungselement 70 des Freilaufes 56. Die Führungsplatten 69 sind derart von den Schraubenfedern 42 beabstandet, dass das Bridenband 16 in etwa linear über die Verbindungsplatten 68, 68' und unter den Führungsplatten 69 freilaufend hindurchgeführt werden kann.

Die Verbindungsplatte 68' im ersten Endbereich 1 des Spannverschlusses 20'' weist auf ihrer den Führungsplatten 69 zugewandten Seite und zwischen den Schraubenfedern 42 einen in das Gehäuseinnere orientierten Flansch 112 mit einer mittig angeordneten Öffnung 114 auf. Das Blockierelement 60, das wiederum in Form eines Blockierarmes ausgebildet ist, greift durch die Öffnung 114 hindurch und ist hinter dem Flansch 112 gegen Zug verankert. Über Stossflanken 113, die an der Vorderseite 115 des Flansches anliegen, ist das Blockierelement 60 gegen Druck gesichert. Das Blockierelement 60 ragt in Richtung des zweiten Endbereiches 2 des Spannverschlusses 20'' über die Schraubenfedern 42 und die Verbindungsplatten 68, 68' gegen das Bridenband 16. Wiederum ist das Blokkierelement 60 von einer Blattfeder 62 untergriffen, welche das Blockierelement 60 federnd gegen den freilaufenden Teil des Bridenbandes 16 drückt. Die Blattfeder 62 ist in etwa parallel zu den Schraubenfedern 42 und im Bereich der Verbindungsplatte 68 zwischen Verbindungsplatte 68 und Schraubenfedern 42 angeordnet. Im zweiten Endbereich 2 des Spannverschlusses 20'' weist die Blattfeder einen senkrecht abgewinkelten Abschnitt 63 auf über den sie mittels der Schraubenfedern 42 gegen die Frontwand 108 des Schlittens 58 gedrückt und dort festgeklemmt wird.

Abgesehen vom Spannverschluss 20, 20', 20" der wie gezeigt, in seinen Details unterschiedlich ausgebildet sein kann, kann auch das Bridenband unterschiedlich ausgestaltet sein, wobei auch die funktionelle Ausgestaltung des Roboters 14 eine Rolle spielt.

Fig. 8 zeigt ein Bridenband 16 wie es beispielsweise zusammen mit einem in Fig. 1 dargestellten Roboter 14 mit Robotergreifern 32 zum Aufweiten der Bride 10, 10' verwendet wird. Das Bandende 28 des Bridenbandes 16 ist als Einführlasche 28' ausgeformt, die zum Einführen in die Einführöffnung 26 des Spannverschlusses 20, 20' bestimmt ist. Der Einführlasche 28' benachbart ist der Zugriffsabschnitt 30 angeordnet, der in diesem Ausführungsbeispiel Eingreiföffnungen 84 für den Zugriff von Robotergreifern 34 aufweist. Der Blockierabschnitt 72 des Bridenbandes 16, dessen Position im Bridenband 16 entsprechend dem Innenumfang des Rohres 12 gewählt wird, ist mit Blockierlöchern 74 versehen, in die das Blockierelement 60 im Freilauf 56 des Spannverschlusses 20 einrasten kann. Die in den Fig. 1 und 2 dargestellten Halter 18 werden an einem Halterabschnitt 86 des Bridenbandes 16 befestigt. Der Halterabschnitt 86 kann zu diesem Zweck Befestigungsmittel, z.B. in Form der hier gezeigten Befestigungslöcher 88, aufweisen. An dem dem Bandende 28 gegenüberliegenden Ende 29 des Bridenbandes 16 ist der Befestigungsabschnitt 40 des Bridenbandes 16 angeordnet, an dem der Spannverschluss 20, 20' 20'' befestigt werden kann. Für eine einfachere Befestigung des Spannverschlusses 20, 20', 20'' sind auch im Befestigungsabschnitt 40 Befestigungsöffnungen 90 vorgesehen, durch welche beispielsweise die Befestigungselemente 36 der Spannverschlüsse 20, 20' hindurchgreifen können, wie dies in den Fig. 4a bis 6b dargestellt ist. Es können aber auch Schrauben, Bolzen oder andere Befestigungsmittel hindurchgesteckt werden.

In Fig. 9 ist eine zweite Ausführungsform eines Bridenbandes 16' gezeigt, die z.B. verwendet werden kann, wenn der Roboter 14 statt der Robotergreifer 32 zum Aufweiten der Bride 10, 10' ein Zahnrad 33 mit Zähnen 116 aufweist, wie dies in Fig. 3 dargestellt ist. Das Bridenband 16' ist prinzipiell gleich aufgebaut wie das Bridenband 16 aus Fig. 8. Im Zugriffsabschnitt 30 des Bridenbandes 16' sind aber statt der Eingreiföffnungen 84 Löcher 85 vorgesehen, mit welchen die Zähne 116 des Zahnrades 33 kämmen können. Ist das Zahnrad 33 des Roboters 14, in Aufweitrichtung gesehen, stromaufwärts vom Spannverschluss 20, 20', 20'' angeordnet, wie dies in Fig. 3 dargestellt ist, so ist statt des Zugriffsabschnitts 30 der Blockierabschnitt 72 benachbart zum Bandende 28 angeordnet. Damit das Blockierelement 60 nur im Blockierabschnitt 72 des Bridenbandes 16 blockierend eingreifen kann, sind das Blockierelement 60 und die Zähne 116 des Zahnrades 33 und dementsprechend auch die Blockieröffnungen 74 und die Löcher 85 jeweils unterschiedlich zueinander ausgestaltet. Im hier gezeigten Bridenband 16' ist beispielsweise die Ausdehnung der Blockieröffnungen 74 quer zur Längsrichtung des Bridenbandes 16 grösser als die der Löcher 85, wobei im hier gezeigten Fall die Zähne 116 des Zahnrades 33 auch mit den Blockieröffnungen 74 im Blockierabschnitt 72 des Bridenbandes 16' kämmen können. Um den Abschnitt 29' am Ende 29 des Bridenbandes 16 vor dem Zugreifen der Zähne 116 zu schützen, ist ein Einschnitt 118 in Breite der Zähne 116 und längs der Mittellängsachse 120 des Bridenbandes 16 vom Ende 29 des Bridenbandes 16 bis hin zum Befestigungsabschnitt 40 vorgesehen. Um einen geordneter Transport der verengten Bride 10, 10' ohne ein Auflösen der spiralförmigen Aufwicklung des Bridenbandes 16' und einen leichten Zugriff des Zahnrades 33 des Roboters 14 zum Aufweiten der Bride 10, 10' während der Montage sicher zu stellen, ist eine Öffnung 122 im Bridenband 16' vorgesehen, in welche die Einführlasche 28' am Bandende 28 eingeführt wird.

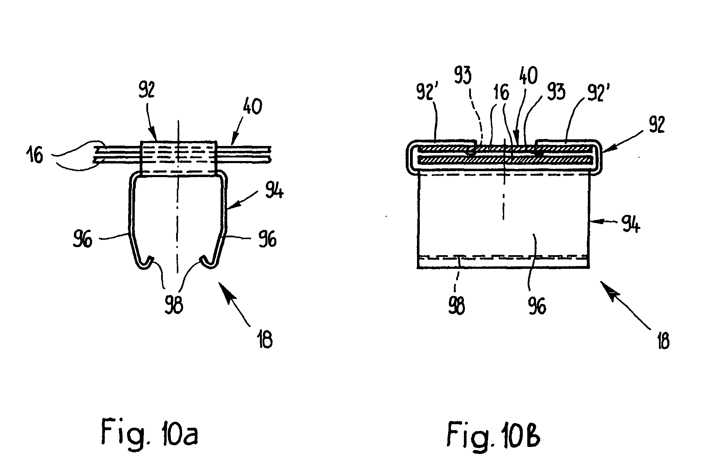

In den Fig. 10a und 10b ist beispielhaft eine Ausführungsform des Halters 18 dargestellt, welcher zur Aufnahme von Kabeln, Rohren oder ähnlichen langgestreckten Gegenständen am Bridenband 16 befestigt ist, wie es in den Fig. 1 bis 3 gezeigt ist. Der Halter 18 weist ein Befestigungsglied 92 auf, das im gezeigten Ausführungsbeispiel C-förmig ausgebildet ist, wobei die aufeinander zu weisenden Flanken 92' des C-förmigen Befestigungsgliedes 92 einem Halteelement 94 für die Aufnahme der langgestrecketen Gegenstände gegenüberliegen. Die Flanken 92' weisen in etwa senkrecht in die C-Form des Befestigungsgliedes 92 hinenragende Laschen 93 auf, die in die Befestigungslöcher 88 im Halterabschnitt 86 des Bridenbandes 16, 16' beispielsweise unter Kraftschluss eingreifen und vorzugsweise durch Umbiegen kleinerer Abschnitte der Flanken gebildet sind. Die C-Form des Befestigungsgliedes 92 ist so ausgestaltet, dass das Halteelement 94 vom Halterabschnitt 86 des Bridenbandes 16, 16' beabstandet ist und ein weiterer Abschnitt des Bridenbandes 16 mit Spiel zwischen dem Halteelement 94 und dem Halterabschnitt 86 des Bridenbandes 16, 16' hindurchgeführt werden kann. Das Halteelement 94 ist in Form von zwei Haltezungen 96 ausgestaltet, deren Endabschnitte 98 hakenförmig aufeinanderzu umgebogen sind. Die Haltezungen 96 sind federnd ausgebildet und umfassen die zu haltenden Gegenstände klippartig.

Neben den in den Figuren gezeigten und beschriebenen Ausführungsformen, sind auch andere Ausführungsformen der erfindungsgemässen Bride 10, 10' vorstellbar.

So kann die Bride 10, 10', wie bereits gesagt, auch als Aussenbride ausgestaltet sein und sie kann beispielsweise auch ohne Halter 18 eingesetzt werden. Als Rastelement 5 kann statt eines Rastbolzens 24, eines Drehbolzens 78 oder eines Rastbalkens 100 z.B. auch eine Rastklammer, ein Rasthebel oder dergleichen vorgesehen sein. Auch das Blockierelement 60 im Freilauf 56 muss nicht ein Blokkierarm sein sondern kann ebensogut die Form eines Dornes haben oder in Form mehrere Blockierzähne ausgestaltet sein. Auch die Position des Freilaufes 56 bezüglich der Feder 42 und des Gehäuses 38 des Spannverschlusses 20 sind nicht zwingend in der gezeigten Form. Die Federkraft der Feder 42 muss nur beim Ausrasten des Rastelementes 5 via Freilauf auf das Bridenband 16, 16' übertragen werden.

Auch die Halter 18 können anders, z.B. als Ösen, ausgestaltet sein, durch welche die langgestreckten Gegenstände hindurchgefädelt werden. Die Halter 18 und der Spannverschluss 20 können mit Bolzen, Schrauben, Nieten, Steckverbindungen oder auch durch Schweissen oder Löten am Bridenband 16, 16' befestigt sein. Auch die Ausgestaltung der Blockierflanken 76 im Blockierabschnitt 72 des Bridenbandes 16, 16' kann auf andere Weise geschehen als nur über Blockierlöcher 74, z.B. über eingearbeitete Absätze oder Mulden. Statt der Eingreiföffnungen 84 und Löcher 85 im Zugriffsabschnitt 30 des Bridenbandes 16 sind beispielsweise auch Haken denkbar.

## Patentansprüche

1. Bride mit einem zu einem Ring bzw. zu einer Spirale gebogenen Bridenband (16), das mittels eines mit einem lösbaren Rastelement (5) versehenen und einerseits mit einem Befestigungsabschnitt (40) und andererseits mit einem Blockierabschnitt (72) des Aridenbandes (16) zusammenwirkenden Spannverschlusses (20, 20', 20") unter Spannung setzbar ist, **dadurch gekennzeichnet, dass** am Befestigungsabschnitt (40) der mit einer Feder (42) versehene Spannverschluss (20, 20', 20'') befestigt ist, der Blockierabschnitt (72) zum Zusammenwirken mit einem Freilauf (56) des Spannverschlusses (20, 20', 20'') bestimmt ist, ein erstes Ende (42') der Feder (42) bezüglich des Befestigungsabschnittes (40) fest abgestützt ist, das Rastelement (5) dazu bestimmt ist, in Raststellung die Feder (42) in gespanntem Zustand zu halten, wobei ein mit dem Rastelement (5) zusammenwirkendes zweites Ende (42'') der Feder (42) derart mit dem Freilauf (56) zusammenwirkt, dass beim Ausrasten des Rastelementes (5) der Blockierabschnitt (72) des Bridenbandes (16) im Freilauf (56) festgehalten und das Bridenband (16) durch die deblockierte Feder (42) unter Spannung gesetzt wird.

2. Bride nach Anspruch 1, **dadurch gekennzeichnet, dass** das Rastelement (5) ein Drehbolzen (78) ist, der so ausgestaltet ist, dass er durch eine Drehung, vorzugsweise um 90°, zum Ausrasten gebracht wird.

3. Bride nach Anspruch 1, **dadurch gekennzeichnet, dass** das Rastelement (5) ein Rastbolzen (24) ist, der durch eine Rastschablone (22) in seiner Raststellung haltbar ist, und die Schablone (22) derart ausgestaltet ist, dass ein Verschieben der Schablone (22) zum Ausrasten des Rastbolzens (24) führt.

4. Bride nach Anspruch 1, **dadurch gekennzeichnet, dass** das Rastelement (5) ein Rastbalken (100) ist, der durch eine an ihm angeordnete Nase (104) in Raststellung haltbar ist, wobei ein Verschieben der Nase (104) zum Ausrasten des Rastbalkens (100) führt.

5. Bride nach einem der Ansprüche 1 bis 4, **dadurch gekennzeichnet, dass** der Blockierabschnitt (72) mit Blockierflanken (76) versehen ist, an denen zum Blokkieren des Bridenbandes (16) ein Blockierelement (60) des Freilaufs (56), vorzugsweise in Form eines Blokkierarms, angreifen kann.

6. Bride nach einem der Ansprüche 1 bis 5, **dadurch gekennzeichnet, dass** der Spannverschluss (20, 20', 20") ein Gehäuse (38) aufweist, über dessen Befestigungselemente (36) der Spannverschluss (20, 20', 20'') am Befestigungsabschnitt (40) des Bridenbandes (16) befestigt ist und gegen dessen eine Stirnwand (44) das erste Ende (42') der Feder (42) fest abgestützt ist, wobei das zweiten Ende (42'') der Feder (42) mit einem den Freilauf (56) tragenden Schlitten (58) zusammenwirkt.

7. Bride nach einem der Ansprüche 1 bis 6, **dadurch gekennzeichnet, dass** sie einen über ein Befestigungsglied (92) am Bridenband (16) befestigten Halter (18) mit einem Halteelement (94) für die Aufnahme von langgestreckten Gegenständen, insbesondere von Kabeln oder Rohren, aufweist, wobei das Befestigungsglied (92) das Halteelement (94) derart vom mit dem Befestigungsglied verbundenen Bridenband (16) beabstandet hält, dass zwischen dem Halteelement (94) und dem fest mit dem Halter (18) verbundenen Bridenband (16) ein weiterer Abschnitt des Bridenbandes (16) hindurchgeführt werden kann.

8. Bride nach Anspruch 7, **dadurch gekennzeichnet, dass** das Halteelement (94) des Halters (18) klippartig mit zwei federnden Haltezungen (96) ausgestaltet ist und, dass vorzugsweise eine Vielzahl von Haltern (18) in festem Abstand hintereinander am Bridenband (16) angeordnet sind.

9. Bride nach einem der Ansprüche 1 bis 8, **dadurch gekennzeichnet, dass** sie eine Innenbride (10') ist und dass das Bridenband (16) durch entriegeln des Spannverschlusses (20, 20', 20'') unter Druckspannung gesetzt wird, wobei die Knicksteifigkeit des Bridenbandes (16) so gewählt ist, dass es unter der aufgebrachten Druckspannung nicht knickt.

10. Bride nach Anspruch 9, **dadurch gekennzeichnet, dass** sie an einem Abschnitt des Bridenbandes (16) von einem Roboter (14) gehalten werden kann und, dass das Bridenband (16) einen Zugriffsabschnitt (30) aufweist, der von einem Roboter (14) zum Aufweiten des Bridenbandes (16) ergriffen werden kann, so dass die Bride (10/10') mit Hilfe des Roboters (14) in einem Rohr (12) montiert werden kann.

11. Bride nach Anspruch 10, **dadurch gekennzeichnet, dass** der Zugriffsabschnitt (30) einem innenliegenden Ende (28) des spiralförmig aufgewickelten Bridenbandes (16) benachbart ist und Eingreiföffnungen (84) für den Zugriff von Robotergreifern (32) aufweist und dass das Bandende 28, welches in Form einer Einführlasche (28') ausgestaltet ist, vor der Montage in eine dafür vorgesehene Einführöffnung (26) des Spannverschlusses (20, 20', 20'') eingeführt ist, wodurch der Zugriffsabschnitt (30) von der benachbarten Windung des Bridenbandes (16) beabstandet gehalten ist.

12. Bride nach Anspruch 10, **dadurch gekennzeichnet, dass** der Zugriffsabschnitt (30) Löcher (85) für den Zugriff eines am Roboter angeordneten Zahnrades (33) aufweist und ein innenliegendes Ende (28) des spiralförmig aufgewickelten Bridenbandes (16), welches vorzugsweise in Form einer Einführlasche (28') ausgestaltet ist, vor der Montage insbesondere in eine dafür vorgesehene Öffnung (122) des Bridenbandes (16) eingeführt ist.

13. Verwendung einer Bride gemäss den Ansprüchen 9 bis 12, zum Halten von langgestreckten Gegenständen, vorzugsweise von Kabeln und Rohren, in Rohrleitungsnetzen und insbesondere in nichtbegehbaren Rohren (12).

## Claims

1. Mounting collar with a collar strap (16) which is curved into a ring or spiral and is tightenable by means of a buckle (20, 20', 20") provided with a releasable latch element (5) and co-operating on the one hand with a fastening section (40), and on the other hand with a jamming section (72), of the strap (16), **characterized in that** the buckle (20, 20', 20"), which is provided with a spring (42), is attached to the fastening section (40), the jamming section (72) is intended to co-operate with an idler (56) of the buckle (20, 20', 20"), a first end (42') of the spring (42) has a fixed bearing with respect to the fastening section (40), the latch element (5) is intended to keep the spring (42) cocked in the latched position, and a second end (42") of the second spring (42) co-operating with the latch element (5), co-operates with the idler (56) so that upon unlatching of the latch element (5) the jamming section (72) of the strap (16) is held fast in the idler (56) and the strap (16) is tightened by the freed spring (42).

2. Collar according to Claim 1, **characterized in that** the latch element (5) is a pivot pin (78) which is configured so that it is unlatched by being turned, preferably through 90°.

3. Collar according to Claim 1, **characterized in that** the latch element (5) is a latch pin (24) which is keepable in its latched position by a latch plate (22), and the plate (22) is configured so that the latch pin (24) is unlatched by a displacement of the plate (22).

4. Collar according to Claim 1, **characterized in that** the latch element (5) is a latch bar (100) which is keepable in the latched position by a neb (104) arranged thereon, the latch bar (100) being unlatched by a displacement of the neb (104).

5. Collar according to any one of Claims 1 to 4, **characterized in that** the jamming section (72) is provided with jamming flanks (76) engageable by a jamming element (60) of the idler (56), preferably in the form of a jamming arm, to jam the collar strap (16).

6. Collar according to any one of Claims 1 to 5, **characterized in that** the buckle (20, 20', 20") has a casing (38) with fastening elements (36) attaching the buckle (20, 20', 20") to the fastening section (40) of the collar strap (16) and with an end wall (44) against which the first end (42') of the spring (42) has a fixed bearing, while the second end (42") of the spring (42) co-operates with a slide (58) carrying the idler (56).

7. Collar according to any one of Claims 1 to 6, **characterized in that** it has a holder (18) attached to the collar strap (16) by a fastening element (92), with a holder element (94) to receive elongate articles, in particular cables or conduits, the holder element (94) being kept by the fastening element (92) sufficiently clear of the strap (16) connected to the fastening element to allow a further section of the strap (16) to pass through the gap between the holder element (94) and the strap (16) fixed to the holder (18).

8. Collar according to Claim 7, **characterized in that** the holder element (94) of the holder (18) is formed as a clip with two resilient tongues (96) and **in that** preferably a plurality of holders (18) are arranged at fixed intervals one after the other on the collar strap (16).

9. Collar according to any one of Claims 1 to 8, **characterized in that** it is an internal collar (10') and **in that** the collar strap (16) is put in compression by releasing the buckle (20, 20', 20"), the buckling strength of the strap (16) being selected so that the strap does not buckle under the applied compressive load.

10. Collar according to Claim 9, **characterized in that** it can be held by a robot (14) in a section of the collar strap (16) and **in that** the strap (16) has a grab section (30) which can be grasped by a robot (14) to expand the strap (16) so that the collar (10/10') can be installed in a pipe (12) by the robot (14).

11. Collar according to Claim 10, **characterized in that** the grab section (30) is adjacent to an inner end (28) of the coiled collar strap (16) and has openings (84) giving access to robot grippers (32) and **in that** the strap end (28), which is formed as a lead-in tongue (28'), is inserted, prior to installation, into an insertion opening (26) provided for the purpose in the buckle (20, 20', 20"), by which means the grab section (30) is held clear of the adjacent turn of the coiled strap (16).

12. Collar according to Claim 10, **characterized in that** the grab section (30) has holes (85) giving access to a sprocket (33) arranged on the robot and an inner end (28) of the coiled collar strap (16), which is preferably formed as a lead-in tongue (28'), is inserted, prior to installation, in particular into an opening (122) provided for the purpose in the collar strap (16).

13. Use of a mounting collar according to Claims 9 to 12 for supporting elongate articles, preferably cables and conduits, in pipe networks, and in particular in no-man-entry pipes (12).

## Revendications

1. Collier de serrage avec un ruban de collier (16) cintré pour former un anneau ou une spirale, que l'on peut mettre sous tension au moyen d'un fermoir-tendeur (20, 20', 20") pourvu d'un élément d'enclenchement libérable (5) et coopérant d'une part avec un tronçon de fixation (40) et d'autre part avec un tronçon de blocage (72) du ruban de collier (16), **caractérisé en ce que** le fermoir-tendeur (20, 20', 20") doté d'un ressort (42) est fixé sur le tronçon de fixation (40), le tronçon de blocage (72) est destiné à coopérer avec un agencement à course morte (56) du fermoir-tendeur (20, 20', 20"), une première extrémité (42') du ressort (42) s'appuie fermement par rapport au tronçon de fixation (40), l'élément d'enclenchement (5) est destiné à maintenir, dans la position d'encliquetage, le ressort (42) dans l'état tendu, une deuxième extrémité (42") du ressort (42) qui coopère avec l'élément d'enclenchement (5) coopèrant avec l'agencement à course morte (56) de telle manière que lors du désenclenchement de l'élément d'enclenchement (5), le tronçon de blocage (92) du ruban de collier (16) est fermement maintenu dans l'agencement à course morte (56), et le ruban de collier (16) est mis sous tension par le ressort débloqué (42).

2. Collier de serrage selon la revendication 1, **caractérisé en ce que** l'élément d'enclenchement (5) est un goujon rotatif (78) conçu de telle façon qu'il est amené à se désenclencher par une rotation, de préférence de 90°.

3. Collier de serrage selon la revendication 1, **caractérisé en ce que** l'élément d'enclenchement (5) est un goujon d'enclenchement (24) susceptible d'être maintenu dans sa position d'enclenchement par un gabarit d'enclenchement (22), et **en ce que** le gabarit (22) est ainsi réalisé qu'un déplacement du gabarit (22) mène au désenclenchement du goujon d'enclenchement (24).

4. Collier de serrage selon la revendication 1, **caractérisé en ce que** l'élément d'enclenchement (5) est une barre d'enclenchement (10), qui peut être maintenue en position d'enclenchement par un ergot (104) agencé sur elle-même, et un déplacement de l'ergot (104) mènant au désenclenchement de la barre d'enclenchement (100).

5. Collier de serrage selon l'une des revendications 1 à 4, **caractérisé en ce que** le tronçon de blocage (72) est doté de flancs de blocage (76) contre lesquels peut venir s'engager un élément de blocage (60) de l'agencement à course morte (56), de préférence sous la forme d'un bras de blocage, pour le blocage du ruban de collier (16).

6. Collier de serrage selon l'une des revendications 1 à 5, **caractérisé en ce que** le fermoir-tendeur (20, 20', 20") comporte un boîtier (38), tel que le fermoir-tendeur (20, 20', 20") est fixé au moyen des éléments de fixation (36) de ce boîtier (38) sur le tronçon de fixation (40) du ruban de collier (16), et la première extrémité (42') du ressort (42) s'appuie fermement contre une paroi frontale (44) du boîtier, la deuxième extrémité (42") du ressort (42) coopèrant avec un chariot (58) qui porte l'agencement à course morte (56).

7. Collier de serrage selon l'une des revendications 1 à 6, **caractérisé en ce qu'**il comprend un support (18), fixé sur le ruban de collier (16) via un organe de fixation (92), avec un élément de support (94) pour recevoir des objets allongés, en particulier des câbles ou des tubes, et l'organe de fixation (92) maintenant l'élément de support (94) écarté du ruban de collier (16) relié à l'organe de fixation de telle manière que l'on peut faire passer entre l'élément de support (94) et le ruban de collier (16) fermement relié au support (18) un autre tronçon du ruban de collier (16).

8. Collier de serrage selon la revendication 7, **caractérisé en ce que** l'élément de support (94) du support (18) est réalisé à la manière d'une pince avec deux languettes de maintien élastiques (96), et **en ce qu'**il est de préférence prévu une pluralité de supports (18) disposés à distance fixe les uns derrière les autres sur le ruban de collier (16).

9. Collier de serrage selon l'une des revendications 1 à 8, **caractérisé en ce qu'**il s'agit d'un collier de serrage intérieur (10'), et **en ce que** le ruban de collier (16) est mis sous contrainte de compression par déverrouillage du fermoir-tendeur (20, 20', 20"), la raideur au pliage du ruban de collier (16) étant ainsi choisie qu'il ne se plie pas sous la contrainte de compression appliquée.

10. Collier de serrage selon la revendication 9, **caractérisé en ce qu'**il peut être maintenu par un robot (14) sur un tronçon du ruban de collier (16), et **en ce que** le ruban de collier (16) comprend un tronçon d'attaque (30) qui peut être saisi par un robot (14) pour élargir le ruban de collier (16) de sorte que l'on peut monter le collier de serrage (10/10') dans un tube (12) avec l'aide de robot (14).

11. Collier de serrage selon la revendication 10, **caractérisé en ce que** le tronçon d'attaque (30) est voisin d'une extrémité intérieure (28) du ruban de collier (16) enroulée en forme de spirale, et comporte des ouvertures d'engagement (84) pour l'engagement d'éléments de préhension (32) du robot, et **en ce que** l'extrémité (28) du ruban, réalisée sous la forme d'une patte d'introduction (28'), est introduite avant le montage dans une ouverture d'introduction (26) prévue à cet effet dans le fermoir-tendeur (20, 20', 20"), grâce à quoi le tronçon d'attaque (30) est maintenu à distance de la spire voisine du ruban de collier (16).

12. Collier de serrage selon la revendication 10, **caractérisé en ce que** le tronçon d'attaque (30) comporte des trous (85) pour l'engagement d'une roue dentée (33) disposée sur le robot, et **en ce qu'**une extrémité intérieure (28) du ruban de collier (16) enroulée en forme de spirale et réalisée de préférence sous la forme d'une patte d'introduction (28'), est introduite avant le montage, en particulier dans une ouverture (122) prévue à cet effet dans le ruban de collier (16).

13. Application d'un collier de serrage selon les revendications 9 à 12 au maintien d'objets allongés, de préférence de câbles et de tubes, dans des réseaux de conduites tubulaires, et en particulier dans des tubes non accessibles (12).
